# EUROPEAN PATENT APPLICATION

(11) **EP 2 519 022 A2**
(43) Date of publication of application: **31.10.2012**
(21) Application number: 11190722.6
(22) Date of filing: 25.11.2011
(51) Int. Cl.: H04N 21/442, H04N 21/431

(54) **Video processing apparatus and video processing method**

(30) Priority: 25.04.2011 JP 2011097476
(71) Applicant: Kabushiki Kaisha Toshiba, Tokyo (JP)
(72) Inventor: Kimura, Takahiro, Tokyo (JP)
(74) Representative: HOFFMANN EITLE

(57) **Abstract**

One embodiment provides a video processing apparatus including: a sensor module configured to recognize a presence of a person; a video processor configured to output demo video relating to a function of the video processing apparatus; and a controller configured to control the video processor so that it starts outputting the demo video when the sensor module recognizes the presence of the person.

## Description

### CROSS-REFERENCE TO RELATED APPLICATION(S)

This application claims priority from Japanese Patent Application No. 2011-097476 filed on April 25, 2011, the entire contents of which are incorporated herein by reference.

### FIELD

Embodiments described herein relate generally to a video processing apparatus and a. video processing method which can operate in a demo mode.

### BACKGROUND

For example, at electronics retail stores, video display apparatus such as liquid crystal TV receivers is operated in a demo (demonstration) mode in order to demonstrate the product features. In the demo mode, for example, the video display apparatus displays video obtained by performing various kinds of processing on original videos to allow customers to recognize differences caused, or displays explanation texts of various functions (e.g., a video processing function for enhancing the image quality) to explain those functions to viewers.

For example, JP-2009-224856-A discloses a technique for switching to display of demo video with arbitrary timing even during display of ordinary video and returning to display of the ordinary video upon its completion.

It is preferable to provide a demo mode function which is more effective in terms of promotion.

### BRIEF DESCRIPTION OF DRAWINGS

A general architecture that implements the various features of the present invention will now be described with reference to the drawings. The drawings and the associated descriptions are provided to illustrate embodiments and not to limit the scope of the present invention.
Fig. 1 illustrates an appearance of a TV broadcast receiver according to an embodiment.
Fig. 2 illustrates a signal processing system of the TV broadcast receiver.
Fig. 3 illustrates an example process executed by the TV broadcast receiver.
Fig. 4 illustrates a selection menu for mode setting which is made in the TV broadcast receiver.
Fig. 5 illustrates example video that is displayed on a display when the TV broadcast receiver is in a demo mode.
Fig. 6 illustrates another piece of example video that is displayed on the display when the TV broadcast receiver is in the demo mode.
Fig. 7 illustrates an image that is displayed on the display when the TV broadcast receiver is in the demo mode.
Fig. 8 illustrates another image that is displayed on the display when the TV broadcast receiver is in the demo mode.
Fig. 9 illustrates an example process executed by a TV broadcast receiver according to the other embodiment.

### DETAILED DESCRIPTION

In general, one embodiment provides a video processing apparatus including: a sensor module configured to recognize a presence of a person; a video processor configured to output demo video relating to a function of the video processing apparatus; and a controller configured to control the video processor so that it starts outputting the demo video when the sensor module recognizes the presence of the person.

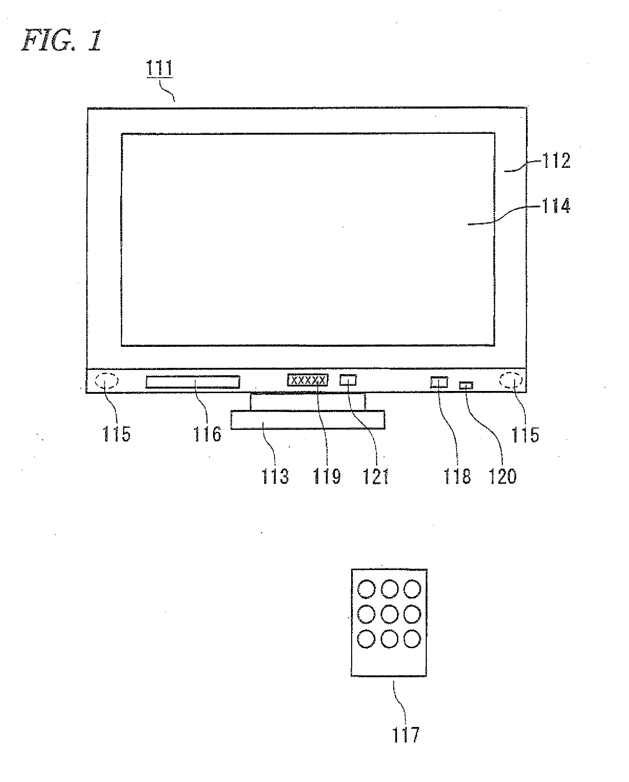

An embodiment of the present invention will be hereinafter described with reference to the drawings. Fig. 1 illustrates an appearance of a TV broadcast receiver 111 according to the embodiment.

The TV broadcast receiver 111 is mainly composed of a thin cabinet 112 and a support stage 113 which supports the cabinet 112 in an erected posture. The cabinet 112 and the support stage 113 may be collectively called a cabinet. The cabinet 112 is provided with a flat panel display 114 having a liquid crystal panel, a plasma display panel, or the like, a pair of speakers 115, a manipulation module 116, a photo receiver 118 for receiving manipulation-information-carrying light transmitted from a remote controller 117, and other components. The manipulation module 116 may be disposed on a side wall, rather than the front wall, of the cabinet 112.

An illumination unit 119 is disposed on the front wall of the cabinet 112 approximately at the center in the horizontal direction under the display 114. The illumination unit 119 has characters or symbols (a logotype) representing, for example, a company name or a type name and uses an LED light source, for example. The illumination unit 119 is turned on when the apparatus 111 is powered on by a user manipulation, and is turned off when the apparatus 111 is powered off by a user manipulation.

A power indicator 120 which indicates a power status of the TV broadcast receiver 111 is disposed at a bottom-right position of the cabinet 112 adjacent to the photo receiver 118. The power indicator 120 also uses an LED light source.

A sensor module 121 for recognizing presence of a person is disposed on the front wall of the cabinet 112 in the vicinity of the illumination unit 119. The sensor module 121 is a camera sensor, for example, and recognizes presence of a person who exists within its sensing range by detecting, for example, his or her face and/or movement using an image taken by a camera. The sensor module 121 may be disposed at an arbitrary position. The sensor module 121 is not limited to a sensor using a camera and may be any module as long as it can recognize presence of a person.

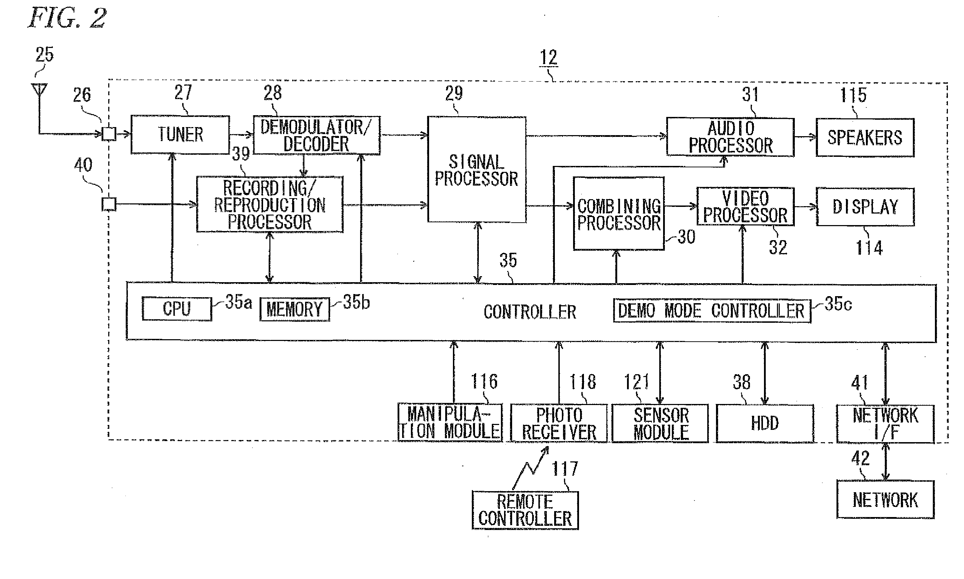

Fig. 2 outlines a signal processing system of the TV broadcast receiver 111. Digital TV broadcast signals received by an antenna 25 are supplied to a tuner 27 via an input terminal 26, and the tuner 27 tunes in to a broadcast signal on a desired channel.

The broadcast signal selected by the tuner 27 is supplied to a demodulator/decoder 28. A digital video signal, audio signal, etc. are restored by the demodulator/decoder 28 and output to a signal processor 29. The signal processor 29 performs prescribed digital signal processing on each of the digital video signal and audio signal supplied from the demodulator/decoder 28.

The signal processor 29 outputs resulting a digital video signal and audio signal to a combining processor 30 and an audio processor 31, respectively. The combining processor 30 superimposes an OSD (on-screen display) signal on the digital video signal supplied from the signal processor 29, and outputs a. resulting digital video signal to a video processor 32.

The video processor 32 converts the received digital video signal into a digital video signal having such a format as to be displayable by a downstream display 114. The video processor 32 also performs various kinds of image-quality-related processing including super-resolution processing and moving image enhancement processing. A. video signal that is output from the video processor 32 is supplied to the display 114 and used for video display.

The audio processor 31 converts the received audio signal into analog audio signals having such a format as to be reproducible by the downstream speakers 115. The analog audio signals that are output from the audio processor 31 are supplied to the speakers 115 and used for sound reproduction.

All operations including the above-described various receiving operations of the TV broadcast receiver 111 are supervised by a controller 35. Incorporating a CPU (central processing unit) 35a, the controller 35 receives a manipulation signal from the manipulation module 116 provided in the cabinet 112 of the TV broadcast receiver 111 (e.g., manipulation switches provided on a side wall, for example of the cabinet 112) or a manipulation signal sent from the remote controller 117 and received by the photo receiver 118, and controls individual modules so that the content of the manipulation is reflected.

The controller 35 incorporates a memory 36b which mainly consists of a ROM (read-only memory) which is stored with control programs to be run by the CPU 35a, a RAM (random access memory) for providing a work area for the CPU 35a, and a nonvolatile memory for storing various kinds of setting information, control information, etc. The memory 36b is also stored with video data of various kinds of demo video to be used in a demo mode (described later). If the sensor module 121 itself has a recording area, video data of demo video may be recorded in the sensor module 121.

The controller 35 includes a demo mode controller 35c, which controls pieces of processing that relate to the demo mode such as starting and ending of the demo mode and processing of reproducing the demo video in the demo mode.

An HDD (hard disk drive) 38 is connected to the controller 35. The controller 35 can perform controls according to a user manipulation performed on the manipulation module 116, the remote controller 117, or the like so that a digital video signal and audio signal that are output from the demodulator/decoder 28 are encoded and converted into a prescribed recording format by a recording/reproduction processor 39 and recorded in the hard disk of the HDD 38.

The controller 35 can also perform controls according to a user manipulation performed on the manipulation module 116, the remote controller 117, or the like so that a digital video signal and audio signal are read from the hard disk of the HDD 38, decoded by the recording/reproduction processor 39 and supplied to the signal processor 29 so as to be used for video display and audio reproduction (described above).

The TV broadcast receiver 111 has an input terminal 40, which serves for direct input of a digital video signal and audio signal from outside the TV broadcast receiver 111. A digital video signal and audio signal that are input via the input terminal 40 are processed, by the recording/reproduction processor 39 and the signal processor 29 and used for video display and audio reproduction (described above) as the controller 35 performs controls according to a user manipulation performed on the manipulation module 116, the remote controller 117, or the like.

Or a digital video signal and audio signal that are input via the input terminal 40 are processed by the recording/reproduction processor 39 and recorded in the HDD 38 as the controller us performs controls according to a user manipulation performed on the manipulation module 116, the remote controller 117, or the like.

The controller 35 is connected to an external network 42 via a network interface 41. Therefore, the controller 35 can use various services provided by plural network servers on the network 42 by selectively accessing them according to a user manipulation performed on the manipulation module 116, the remote controller 117, or the like.

The controller 35 is connected to the sensor module 121. When the sensor module 121 has recognized presence of a person, the controller 35 (demo mode controller 35c) establishes the demo mode and controls the video processor 32 so that it starts outputting demo video. This feature will be described later.

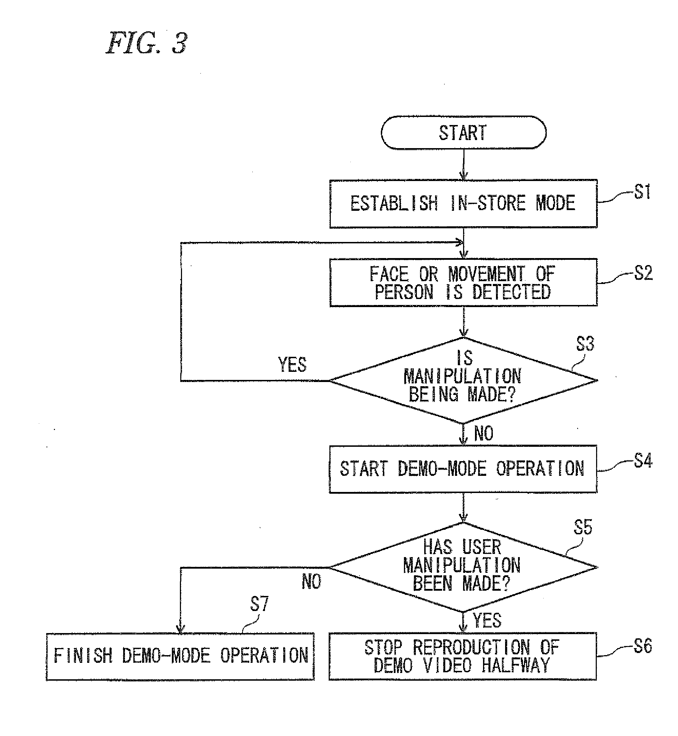

Fig. 3 illustrates an example process which is executed by the TV broadcast receiver 111. This process is executed in a state that the TV broadcast receiver 111 is set in an in-store mode.

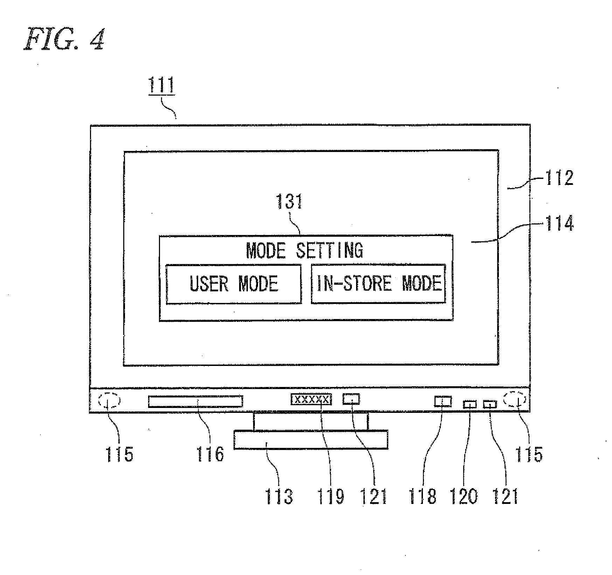

For example, the in-store mode is set in the following manner. The controller 35 controls the combining processor 30, the video processor 32, etc. according to a manipulation performed on the manipulation module 116 or the remote controller 117 so that a selection menu 131 through which to give an instruction to set a user mode or the in-store mode is displayed on the display 114 as shown in Fig. 4. The user mode is a mode that is preferable for home use and in which pieces of processing relating to the demo mode such as processing for causing a transition from a normal mode to the demo mode upon recognition of presence of a person by the sensor module 121 and demo video reproduction/non-reproduction processing are not performed. The in-store mode is a mode that is preferably used in volume-sales electrical appliance stores etc. and in which pieces of processing relating to the demo mode such as processing for casing a transition from a normal mode to the demo mode upon recognition of presence of a person by the sensor module 121 and demo video reproducfion/non-reproducton processing are performed. As such, the TV broadcast receiver 111 is provided with a selecting module which allows the user to make a selection as to whether to enable or disable output of demo video from the video processor 32 to the display 114. The normal mode is a mode in which the user views a broadcast program or the like ordinarily,

In the embodiment, at step S1, the in-store mode is established in the TV broadcast receiver 111 through the selection menu 131. It is assumed that, for example, a broadcast program received by the tuner 27 is being displayed on the display 114.

At step S2, when an arbitrary person stands, for example, right in front of the TV broadcast receiver 111, the sensor module 121 detects the face or movement of the person and recognizes his or her presence. As mentioned above, being a camera sensor, for example, the sensor module 121 recognizes presence of a person who exists within its sensing range by detecting, for example, his or her face and/or movement using an image taken.

At step S3, the controller 35 judges whether or not the TV broadcast receiver 111 is being manipulated by the manipulation module 116 or the remote controller 117. If the TV broadcast receiver 111 is not being manipulated (S3: no), at step S4 the demo mode is established in the TV broadcast receiver 111 under the control of the demo mode controller 35c and reproduction of demo video is started.

On the other hand, if the TV broadcast receiver 111 is being manipulated by the manipulation module 116 or the remote controller 117 (S3: yes), the demo mode is not established and, instead, the demo mode controller 35c performs controls so that the process returns to step S2. In a state that presence of a person is recognized by the sensor module 121 but this person or another person is manipulating the TV broadcast receiver 111 (e.g., he or she is switching the channel or adjusting the sound volume), sudden switching to the demo mode and resulting reproduction of demo video may obstruct that manipulation. In view of this, in the TV broadcast receiver 111 according to the embodiment, the demo mode controller 35c performs controls so that the demo mode is established and demo video is reproduction in a case that presence of a person is recognized by the sensor module 121 and no one is manipulating the TV broadcast receiver 111.

Upon switching to the demo mode, demo video of a prescribed function is output to the display 114 under the control of the demo mode controller 35c. Data of demo video to be displayed in the demo mode are stored in a prescribed storage area (e.g., memory 36b) in advance. The following description will be made with an assumption that in the demo mode of the embodiment pieces of demo video of two kinds of processing, that is, super-resolution processing and moving image enhancement processing, are output to the display 114 for respective prescribed times in order. The super-resolution processing is sharpening processing for restoring a high-resolution video signal by increasing pixels by estimating true pixel values on the basis of a current video signal. The moving image enhancement processing is video processing for making a motion-involving portion of video smoother. For example, the moving image enhancement processing is processing of converting the frame rate by inserting interpolation frames between the frames of video that is supplied at a rate of 60 frames per second to thereby realize display of 120 frames (or more) per second.

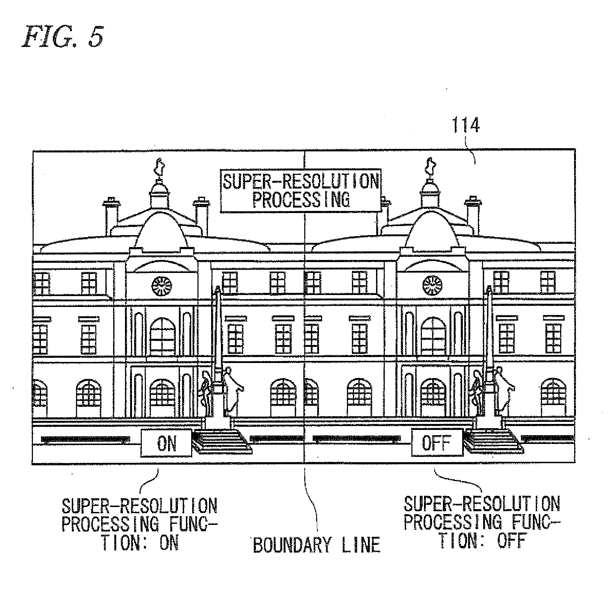

Upon the start of the demo-mode operation, the demo mode controller 35c controls the video processor 32 etc. so that a function name of the current demo video and a boundary line are displayed on the display 114. More specifically, for example, as shown in Fig. 5, a function name "Super-resolution processing" of the current demo video is displayed at a top-center position of the display 114 and a boundary line is displayed so as to separate the screen into two equal parts in the horizontal direction. Furthermore, a word "OFF" is displayed at a bottom position of the right-hand divisional screen and a word "ON" is displayed at a bottom position of the left-hand divisional screen, where "OFF" means that the associated image is not subjected to the super-resolution processing and "ON" means that the associated image is subjected to the super-resolution processing. In this manner, the image that is subjected to the super-resolution processing and the image that is not subjected to the super-resolution processing are displayed simultaneously side by side on the same screen. Therefore, the viewer can easily recognize the function of the super-resolution processing of the TV broadcast receiver 111 on the basis of differences (in sharpness, for example) between the two images.

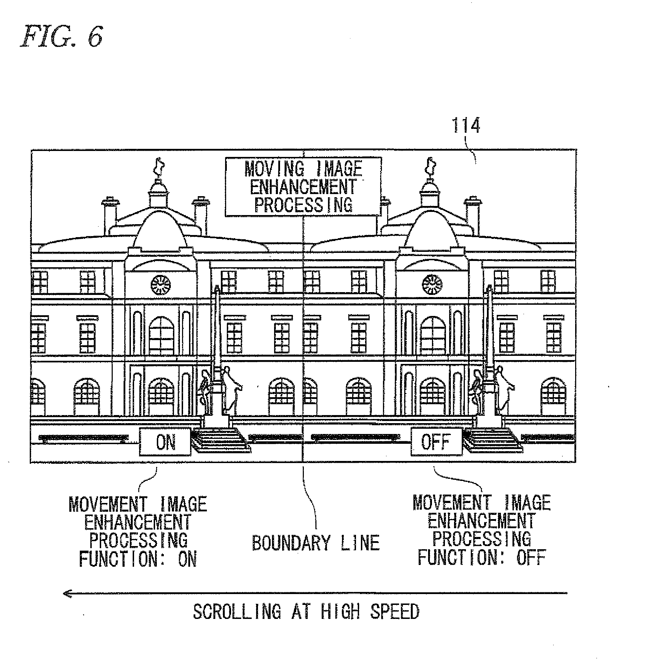

As soon as the preset display period (e.g., 30 seconds) of the demo video of the super-resolution processing has elapsed, reproduction of the demo video of the moving image enhancement processing is started. More specifically, for example, as shown in Fig. 6, a. function name "Moving image enhancement processing" is displayed at a top-center position of the display 114 and a boundary line is displayed so as to separate the screen into two equal parts in the horizontal direction. The demo mode controller 35c performs controls so that a prescribed still image is scrolled leftward at a high speed.

Furthermore, a word "OFF" is displayed at a bottom position of the right-hand divisional screen and a word "ON" is displayed at a bottom position of the left-hand divisional screen, where "OFF" means that the associated image is not subjected to the moving image enhancement processing and "ON" means that the associated image is subjected to the moving image enhancement processing. Controls may be made so that after disappearing at the left end of the screen of the display 114 or the boundary line the image reappears at the boundary line or the right end of the screen.

The high-speed scrolling is performed because enhancement of a moving image is more remarkable in a fast operation. Since the image that is subjected to the moving image enhancement processing and the image that is not subjected to the moving image enhancement processing are displayed simultaneously side by side on the same display 114, the viewer can easily recognize the function of the moving image enhancement processing of the TV broadcast receiver 111 on the basis of differences in image quality between the two images.

In the embodiment, the function name "Moving image enhancement processing," the boundary line, and the words "ON" and "OFF" are displayed independently of the scrolling so as to be fixed on the screen of the display 114.

While either piece of demo video is being reproduced (i.e., in the demo mode), at step S5 the controller 35 (demo mode controller 35c) judges whether or not a prescribed manipulation has been performed on the manipulation module 116 or the remote controller 117.

If a prescribed manipulation has been made while either piece of demo video is bein reproduced (S5: yes), at step S6 the reproduction of the demo video is stopped halfway and the demo-mode operation is finished. Then, an operation corresponding to a manipulation performed on the manipulation module 116 or the remote controller 117 is performed. For example, if the user makes a manipulation for finishing the demo-mode operation, the demo-mode operation is finished. For example, a selection menu through which to give an instruction to finish the demo-mode operation is displayed on the display 114 and the demo-mode operation is finished depending on a manipulation on the selection menu.

If no prescribed manipulation has been performed on the manipulation module 116 or the remote controller 117 while either piece of demo video is being reproduced (S5: no) and all the pieces of demo video (i.e., the pieces of demo video of the super-resolution processing and the moving image enhancement processing) have been reproduced for the respective prescribed times, at step S7 the demo-mode operation is finished. After the completion of the demo-mode operation, switching may be made to display of an ordinary broadcast program. Alternatively, the first piece of demo video (in this example, the demo video of the super-resolution processing) may be reproduced again from its start position (looping).

As described above, in the embodiment, when presence of a person is recognized by the sensor module I2i, the demo mode controller 35c performs controls so that the demo mode is established and reproduction of demo video is started. With this configuration, reproduction of demo video can be started from its start position so as to be timed with arrival of a customer at, for example, in front of the TV broadcast receiver 111 in a store or the like. Therefore, the demo video can be presented to the customer more effectively, whereby the promotion effect can be increased.

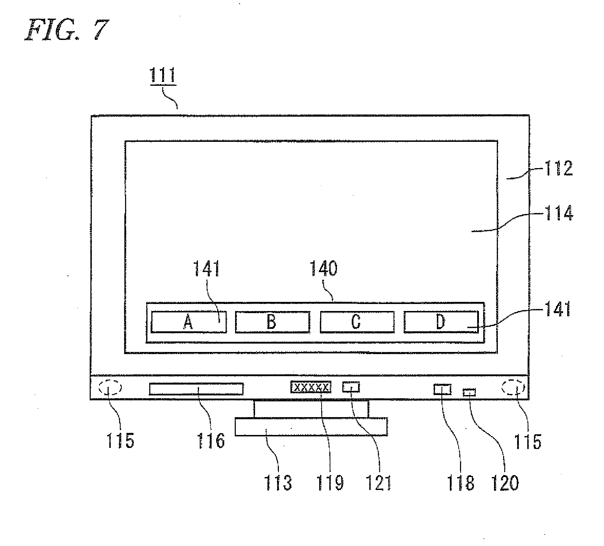

The display form of demo video is not limited to the examples shown in Figs. 5 and 6. For example, the TV broadcast receiver 111 may be configured so that upon switching to the demo mode a demo video region 140 in which to display the names of some functions of the TV broadcast receiver 111 is displayed on part of the screen of the display 114 as shown in Fig. 7. In this case, a broadcast program or the like may be displayed in the region other than the demo video region 140. The demo video region 140 has at least one feature box 141 where the names of some functions of the TV broadcast receiver 111 are displayed. For example, function names "Super-resolution processing," Moving image enhancement processing," "LED backlight control" and "Automatic image quality adjustment" are character-displayed in feature boxes A-D, respectively. The feature boxes 141 allow a viewer to recognize the main functions of the TV broadcast receiver 111.

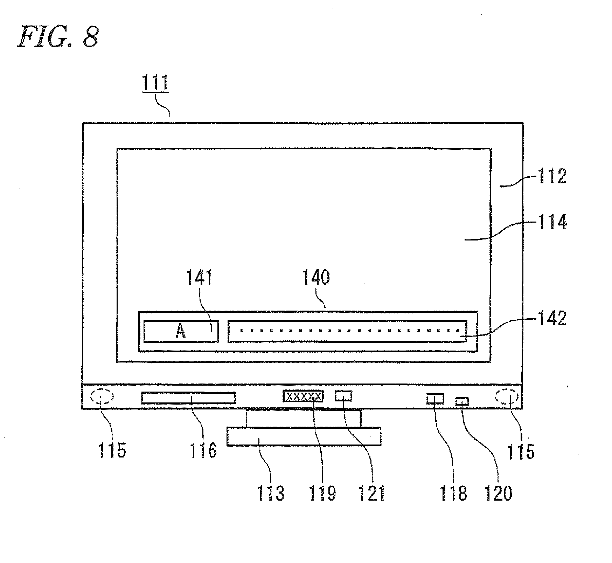

After a lapse of a prescribed time (e.g., 15 seconds), a transition is made to a picture shown in Fig. 8. In this example, an explanation region 142 in which to display an explanation of the function (in this example, super-resolution processing) whose name is displayed in the feature box A is displayed as part of the demo video region 140. For example, explanatory sentences of the fact that the super-resolution processing is processing of increasing the resolution of a video signal and outputting a resulting video signal and its mechanism are displayed in the explanation, region 142. Then, explanatory sentences of the remaining functions are displayed in the feature boxes B-D in order. As described above, demo video may be displayed in part of the screen of the display 114.

The controller 35 (demo mode controller 35c) may control the video processor 32 so that it automatically stops output of demo video as soon as the sensor module 121 comes not to recognize any person.

Next, the other embodiment of the invention will be described. The other embodiment is different from the above-mentioned embodiment in that if the sensor module 121 recognizes another person (second person) after it recognized a first person and reproduction of demo video was started, reproduction of the demo video is restarted from its start position. Even if the sensor module 121 recognizes another person (second person) after it recognized a first person and reproduction of demo video was started, reproduction of the demo video is not restarted from its start position as long as it continues to recognize the first person.

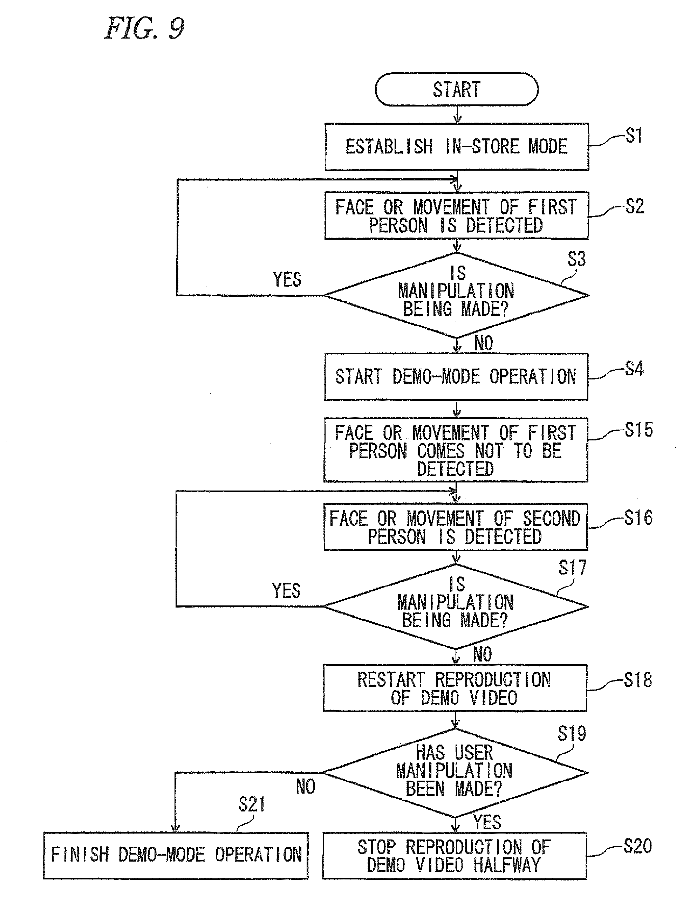

A process which is executed by a TV broadcast receiver 111 according to the other embodiment will be described with reference to Fig. 9. Modules etc. having the same or corresponding ones in the above-mentioned embodiment will be given the same reference symbols and descriptions therefor will be omitted or simplified.

When a first person stands, for example, in front of the TV broadcast receiver 111, at step S12 the sensor module 121 detects his or her face or movement and recognizes his or her presence.

Upon the recognition of the presence of the first person, at step S4 a demo-mode operation is started. Pieces of demo video (see Figs. 5-8) are displayed in order on the display 114 under the control of the demo mode controller 35c.

If the first person disappears from in front of the TV broadcast receiver 111 during reproduction of demo video, at step 815 the sensor module 121 comes not to detect his or her face or movement.

If another person (second person) (i.e., a person different from the first person) stands, for example, in front of the TV broadcast receiver 111, at step S16 the sensor module 121 detects his or her face or movement and recognizes his or her presence.

At step S17, the controller 35 judges whether or not the TV broadcast receiver 111 is being manipulated by the manipulation module 116 or the remote controller 117. If the TV broadcast receiver 111 is not being manipulated (S17: no), at step S18 8 reproduction of the demo video is restarted from the start position under the control of the demo mode controller 35c. If the second person is recognized before the sensor module 121 comes not to recognize the first person, reproduction of the demo video from the start position is not restarted.

On the other hand, if the TV broadcast receiver 111 is being manipulated by the manipulation module 116 or the remote controller 117 (S17: yes), reproduction of the demo video is not restarted and, instead, the demo mode controller 35c performs controls so that the process returns to step S16. That is, the reproduction, started at step S4, of the demo video is continued.

Upon the restart of the demo-mode operation, demo video of a prescribed function is reproduced from its start position under the control of the demo mode controller 35c. That is, reproduction of a first piece of demo video is restarted if the sensor module 121 recognizes the second person after it recognized the first person and the reproduction of the first piece of demo video was started. For example, if the reproduction of the demo video of the super-resolution processing has already been finished and the demo video of the moving image enhancement processing is being displayed at the time point when the second person is recognized after the demo-mode operation was started at step S4, reproduction of the demo video of the super-resolution processing is restarted from its start position.

While either piece of demo video is being reproduced again, it is judged at step S19 whether or not a. manipulation has been performed on the manipulation module 116 or the remote controller 117. If a manipulation has been made while a piece of demo video is being reproduced (S19: yes), at step S20 the reproduction of the demo video is stopped halfway and the demo-mode operation is finished. Then, an operation corresponding to a manipulation performed on the manipulation module 116 or the remote controller 117 is performed.

If no prescribed manipulation has been performed on the manipulation module 116 or the remote controller 117 while either piece of demo video is being reproduced (S19: no) and all the pieces of demo video (i.e., the pieces of demo video of the super-resolution processing and the moving image enhancement processing) have been reproduced for me respective prescribed times, at step S21 the demo-mode operation is finished as at step S7 shown in Fig. 3.

In the other embodiment, if the sensor module 121 recognizes a second person after it recognized a first person and reproduction of demo video was started, controls are performed so that reproduction of demo video is restarted from the start position. With this configuration, the demo video can be newly presented to the second person from the start position and hence the promotion effect can be increased.

In the other embodiment, reproduction of demo video is restarted from the start position if the sensor module 121 detects the face or movement of a second person after a first person disappeared from in front of the TV broadcast receiver 111 during reproduction of the demo video and hence the sensor module 121 came not to detect the face or movement of the first person and recognize his or her presence (step S15). To avoid the problem described below, it is preferable to perform controls so that reproduction of the demo video is not restarted even if a second person is recognized as long as presence of a first person continues to be recognized. If reproduction of the demo video is restarted from the start position when a second person is recognized while a first person is viewing the demo video, the first person is forced to view the same part of the demo video again and the demo video may not be presented fully to the first person.

The invention is not limited to the above embodiments, and may be embodied while modifying constituent elements without departing from the spirit and scope of the invention. And, various inventive concepts may be conceive by properly combining plural constituent elements in each embodiment.

For example, the demo mode controller 35c may control the audio processor 31 so that the volume of sounds corresponding to demo video becomes higher than that of sounds of an ordinary broadcast program. The demo mode controller 35c may control the audio processor 31 so that the volume is increased when switching is made to the demo mode even if the TV broadcast receiver 111 is in a mute state or a volume-zero state. This measure makes it possible to present demo video to a viewer more effectively and to thereby increase the promotion effect.

Information of the face of a person recognized by the sensor module 121 may be recorded automatically. For example, when a first person is recognized, the controller 35 (demo mode controller 35c) records information of the face of the first person in the memory 35b and controls the video processor 32 so that it outputs a first piece of demo video. If the sensor module 121 recognizes the first person again after it came not to recognize his or her presence (i.e., the first person disappeared), the controller 35 (demo mode controller 35c) controls the video processor 32 so that it outputs a second piece of demo video which is different from the first piece of demo video. For example, the first piece of demo video is demo video which uses a first image (e.g., an image of a person) and the second piece of demo video is demo video which uses a second (e.g., an image of a landscape) that is different from the first image. This measure makes it possible to present, to a first person, different pieces of demo video when the first person is recognized first time and second time, respectively. Therefore, this measure makes it possible to present demo video to a viewer more effectively and to thereby increase the promotion effect.

Reproduction of demo video may be restarted from the start position if the sensor module 121 detects the face or movement of a first person again after the fist person disappeared from in front of the TV broadcast receiver 111 during reproduction of the demo video and hence the sensor module 121 came not to detect the face or movement of the first person and recognize his or her presence (step S15). Alternatively the following measure is possible. When the sensor module 121 comes not to detect the face or movement of a first person, the position (e.g., a position that is X seconds after the start position), corresponding to this time point, of the demo video is stored. If the face or movement of the first person is detected again, reproduction of the demo video is restarted from the stored position.

## Claims

1. A video processing apparatus comprising:
a sensor module configured to recognize a presence of a person;
a video processor configured to output demo video relating to a function of the video processing apparatus; and
a controller configured to control the video processor so that it starts outputting the demo video when the sensor module recognizes the presence of the person.

2. The apparatus of Claim 1,
wherein the controller controls the video processor so that it does not restart output of the demo video from a start position even if, in a state where the sensor module has recognized a first person and where the video processor has started outputting the demo video, the sensor module recognizes a second person who is different from the first person as long as the sensor module continues to recognize the first person.

3. The apparatus of Claim 1 or 2,
wherein the controller controls the video processor so that it restarts output of the demo video hom a start position if, in a state where the sensor module has recognized a first person and where the video processor has started outputting the demo video, the sensor module recognizes a second person who is different from the first person as long as the sensor module has come not to recognize the first person.

4. The apparatus of one of the preceding claims,
wherein the controller controls the video processor so that it restarts output of the demo video from a start position if, in a state where the sensor module has recognized a first person and where the video processor has started outputting the demo video, the sensor module recognizes a first person again as long as the sensor module has come not to recognize the first person.

5. The apparatus of one of the preceding claims, further comprising
a selecting module configured to allow a user to make a selection as to whether to enable or disable output of the demo video from the video processor.

6. The apparatus of one of the preceding claims,
wherein the controller controls the video processor so that it stops outputting the demo video if the sensor module comes not to recognize the person.

7. The apparatus of one of the preceding claims, further comprising
an audio processor configured to reproduce a sound corresponding to the demo video and/or a sound corresponding to video other than the demo video,
wherein the controller controls the audio processor so that volume of the sound corresponding to the demo video becomes higher than volume of the sound corresponding to the video other than the demo video.

8. The apparatus of one of the preceding claims, further comprising
a memory configured to store information of a face of the person recognized by the sensor module,
wherein, when the sensor module recognizes a presence of a first person, the controller performs a control so that information of a face of the first person is stored in the memory and controls the video processor so that it outputs first demo video, and
wherein the controller controls the video processor so that it outputs second demo video that is different from the first demo video if the sensor module recognizes the first person again after it came not to recognize the presence of the first person.

9. A video processing method for a video processing apparatus having a video processor capable of outputting demo video relating to a function of the video processing apparatus, the method comprising:
recognizing presence of a person with a sensor module; and
upon recognition of the presence of the person with the sensor module, controlling the video processor so that it starts outputting demo video relating to a function of the video processing apparatus.
